# FASCICULE DE BREVET EUROPEEN

(11) **EP 1 346 447 B1**
(45) Date de publication et mention de la délivrance du brevet: **26.01.2011**
(21) Numéro de dépôt: 01989674.5
(22) Date de dépôt: 28.12.2001
(51) Int. Cl.: H02B 1/20

(54) **SYSTEME DE CABLAGE INTEGRE POUR ARMOIRE TECHNIQUE**
INTEGRIERTES VERDRAHTUNGSSYSTEM FÜR EIN ELEKTRISCHES GEHÄUSE
INTEGRATED WIRING SYSTEM FOR ELECTRICAL CABINET

(30) Priorité: 28.12.2000 FR 0017222
(43) Date de publication de la demande: 24.09.2003
(73) Titulaire: ERI, 75012 Paris (FR)
(72) Inventeur: MARTINET, Bernard, F-78830 Bonnelles (FR)
(74) Mandataire: Novagraaf Technologies
(86) Numéro de dépôt international: PCT/FR2001/004229
(87) Numéro de publication internationale: WO 2002/054551

(56) Documents cités:
- WO-A-99/03179
- CH-A- 337 904

## Description

Une armoire technique avec les caractéristiques du préambule de la revendication 1 est décrit dans WO 99 03179.

L'invention concerne une armoire technique comportant une pluralité d'étagères ou de supports destinés à recevoir des appareils électriques pourvue d'un système de câblage intégré dans la structure, permettant de connecter facilement les câbles horizontaux aux câbles verticaux.

Plus particulièrement, l'armoire technique est destinée à recevoir des appareils électriques disposés sur une pluralité d'étagères ou superposés les uns aux autres par fixation entre les montants de l'armoire, et à connecter lesdits appareils au moyen de câbles électriques.

On connaît ainsi des armoires techniques destinées à recevoir une pluralité d'appareils électriques dont les câbles sont soit suspendus au plafond, soit dissimulés sous un plancher technique, ces solutions nécessitant la présence d'accessoires supplémentaires dont le coût n'est pas négligeable.

Pour remédier à ces inconvénients, la présente invention propose une armoire technique dans laquelle le système de câblage ne nécessite pas la présence de goulottes extérieures.

Un système de goulottes intégré à l'armoire permet à la fois une gestion horizontale des câbles en partie basse et/ou haute de l'armoire en respectant la courbure des câbles et une gestion verticale de ces mêmes câbles tout en les connectant aux différents appareils électriques présents dans l'armoire.

Selon l'invention, l'armoire technique est caractérisée en ce qu'elle comprend au moins un chemin de câbles en partie basse, ledit chemin de câbles s'étendant sur toute la largeur de l'armoire, et des goulottes verticales destinées à guider les câbles de façon à les connecter audits appareils, situées au niveau d'au moins un des montants de l'armoire, lesdites goulottes étant agencées pour recevoir des boîtiers de connexion au niveau de chaque étagère ou de chaque rangée d'appareils.

Selon un mode de réalisation particulier de l'invention, le chemin de câbles situé en partie basse est destiné aux câbles conduisant le courant faible.

Selon un autre mode de réalisation particulier de l'invention, l'armoire technique comprend également un chemin de câbles situé en partie haute.

Selon un autre mode de réalisation particulier de l'invention, le chemin de câbles situé en partie haute est destiné aux câbles conduisant le courant fort.

Selon un autre mode de réalisation particulier de l'invention, les goulottes verticales peuvent présenter une section transversale généralement en S formant deux demi-goulottes, l'une desdites demi-goulotte étant agencée pour recevoir les câbles provenant du chemin de câbles situé en partie basse, et l'autre demi-goulotte étant agencée pour recevoir les câbles provenant du chemin de câbles situé en partie haute.

Selon un autre mode de réalisation particulier de l'invention, cette armoire peut être composée d'une pluralité de modules.

Selon un autre mode de réalisation particulier de l'invention, la structure de l'armoire technique peut être en aluminium.

Selon un autre mode de réalisation particulier de l'invention, l'armoire technique peut être destinée à recevoir des serveurs informatiques disposés sur une pluralité d'étagères ou superposés les uns aux autres par fixation entre les montants de l'armoire.

Dans un mode de réalisation particulier, l'armoire peut en outre être destinée à recevoir des appareils électriques nécessitant une ventilation, chacun desdits appareils disposant de moyens de ventilation individuels agencés pour faire circuler l'air d'une face avant vers une face arrière et évacuer ledit air derrière lesdites faces arrière, cette armoire étant caractérisée en ce qu'elle comporte un système de ventilation comprenant des moyens de distribution d'air au niveau de chaque étagère ou de chaque rangée d'appareils, lesdits moyens étant agencés pour approvisionner indépendamment chaque niveau avec un flux d'air primaire circulant sensiblement horizontalement en vis-à-vis desdites faces avant.

Selon ce mode de réalisation, les moyens de distribution d'air peuvent comprendre un boîtier situé sur l'avant de l'armoire et comprenant des ventilateurs-extracteurs, ainsi qu'au moins une goulotte reliée audit boîtier s'étendant verticalement le long d'au moins un des côtés de l'armoire et comportant au moins une ouverture de sortie d'air au niveau de chaque rangée d'appareils.

Selon ce mode de réalisation, ledit boîtier peut être situé en partie basse de l'armoire.

Dans ce mode de réalisation particulier, les moyens de ventilation individuels peuvent comprendre au moins un extracteur monté dans la face arrière.

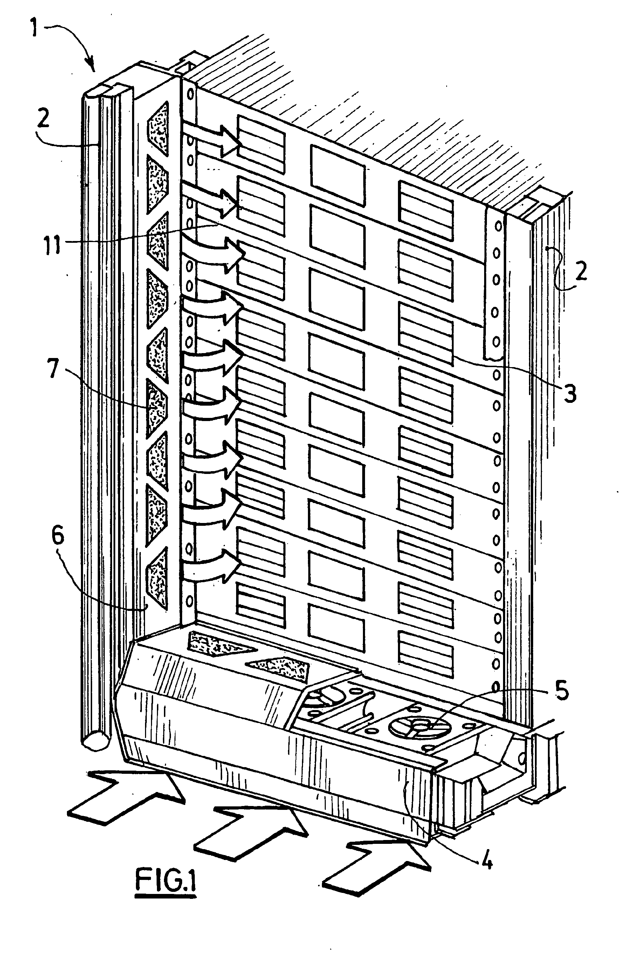

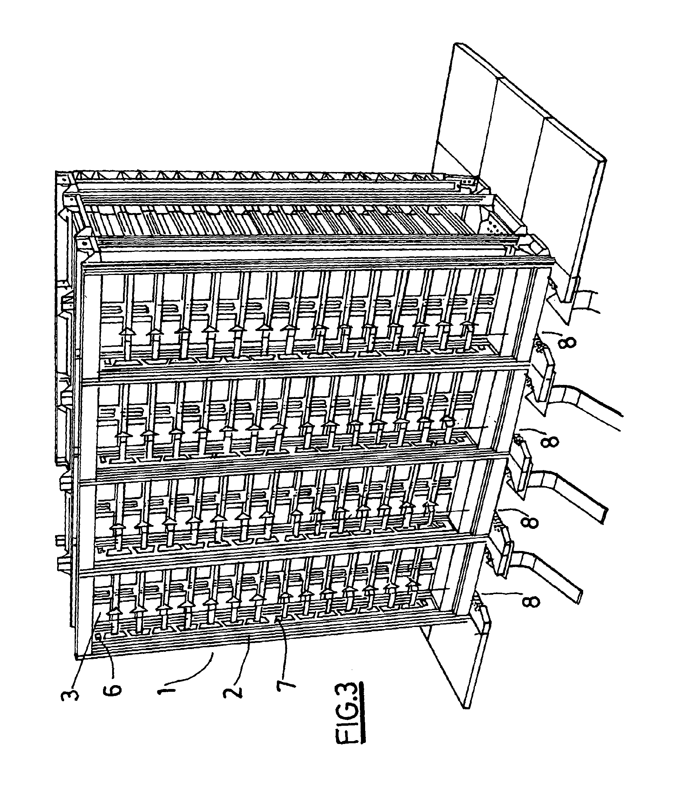

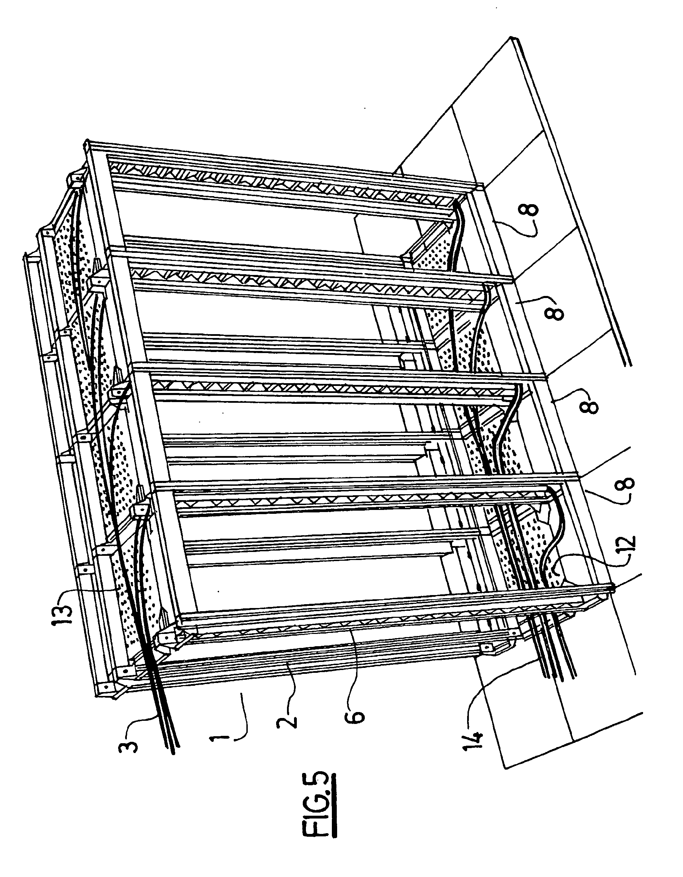

On décrira à présent, à titre d'exemples non limitatifs, des modes de réalisation particuliers de l'invention, en référence aux dessins schématiques annexés dans lesquels les figures 1 à 4 représentent plus particulièrement le système de ventilation, et les figures 5 à 8 le système de câblage intégré à l'armoire.

Plus précisément :
- la figure 1 est une vue en perspective d'un module de la face avant de l'armoire technique ;
- la figure 2 est une vue partielle en coupe de la figure 1, selon un plan de coupe vertical traversant longitudinalement le boîtier contenant les ventilateurs-extracteurs ;
- la figure 3 est une vue en perspective de la face avant de l'armoire technique ;
- la figure 4 est une vue en perspective de la face arrière de l'armoire technique ;
- la figure 5 est une vue en perspective de l'armoire technique, comportant un chemin de câbles en partie basse et un chemin de câbles en partie haute ;
- la figure 6 est une vue en perspective de l'armoire technique, comportant un chemin de câbles en partie basse ;
- les figures 7a, 7b, 7c sont des vues en perspective d'une goulotte verticale comportant des boîtiers de connexion, et
- la figure 8 représente une goulotte verticale dont la section transversale en S forme deux demi-goulottes.

Les figures 1 à 6 représentent une armoire technique (1) formée de montants (2) et d'une succession de racks (11) sur lesquels sont disposés des appareils électriques (3). Ces appareils électriques (3) peuvent également être disposés sur des étagères superposées.

Notamment, ces appareils électriques (3) peuvent être des serveurs informatiques.

La figure 1 montre plus particulièrement un boîtier (4) situé sur l'avant de l'armoire (1) formant une enceinte dans laquelle sont montés des ventilateurs-extracteurs (5) permettant d'aspirer le flux d'air primaire. Ce boîtier (4) peut également comporter des filtres à air (non représentés) pour éviter la présence de poussières à l'intérieur de l'armoire.

Le flux d'air primaire passe ensuite de l'enceinte dans des goulottes verticales (6) reliées au boîtier (4) et s'étendant verticalement le long d'au moins un des côtés de l'armoire.

Les goulottes verticales (6) comportent une ou plusieurs ouvertures de sortie d'air (7) au niveau de chaque rack (11), ou de chaque rangée d'appareils électriques (3), permettant au flux d'air primaire d'approvisionner indépendamment chaque niveau.

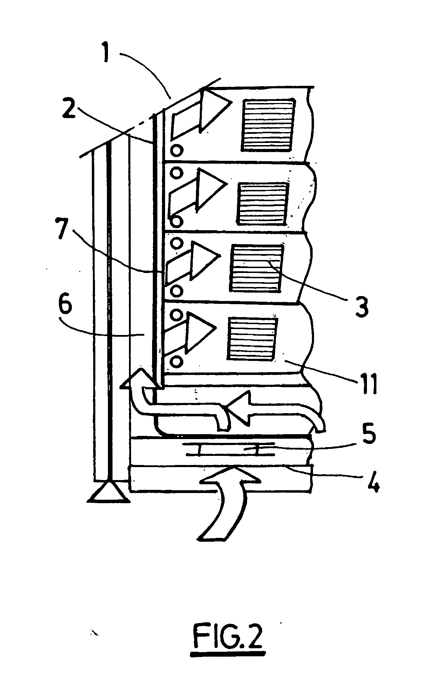

La circulation du flux d'air primaire est schématisée de façon plus précise sur la figure 2.

Sur chaque rack (11) est disposée une pluralité d'appareils électriques (3) qui sont par conséquent en contact avec le flux d'air primaire, ce flux circulant sensiblement horizontalement en vis-à-vis des faces avant desdits appareils (3).

Ces appareils électriques (3) disposent eux-mêmes de moyens de ventilation individuels (9) agencés pour faire circuler le flux d'air de leur face avant vers leur face arrière, et évacuer ledit air derrière ladite face arrière. Ces moyens 9 sont montés sur les faces arrière des appareils (3).

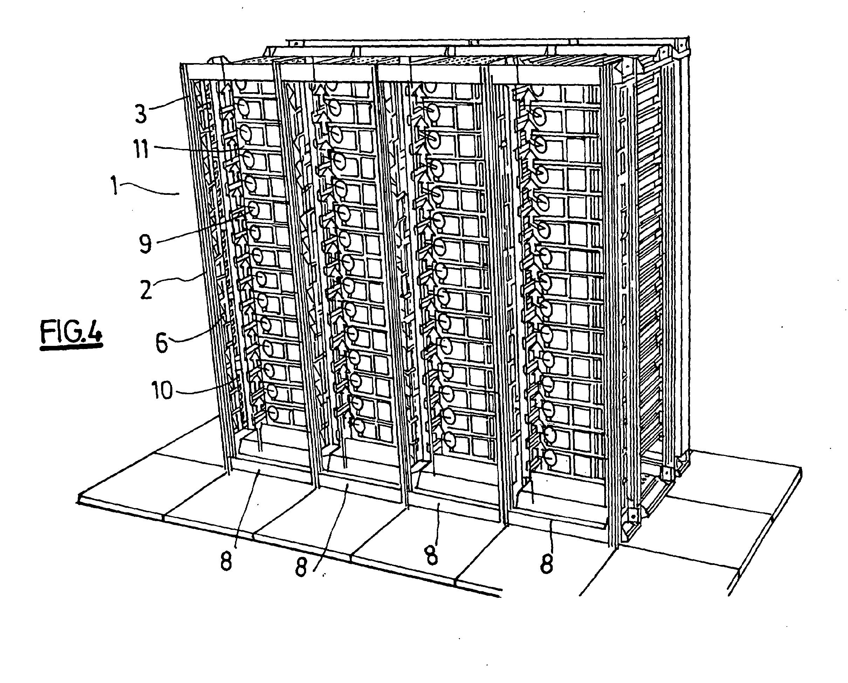

La figure 4 présente la face arrière de l'armoire (1) composée de 4 modules (8). On peut y voir les moyens d'évacuation d'air (9) constitués d'extracteurs situés à l'arrière des appareils électriques (3).

En outre, la figure 4 fait apparaître des boîtiers de connexion (10) situés dans les goulottes verticales (6), au niveau de chaque rack (11), permettant de connecter des câbles aux appareils électriques (3).

Concernant ce système de câblage, la figure 5 montre plus précisément un chemin de câbles situé en partie basse de l'armoire (12) et un chemin de câbles situé en partie haute de l'armoire (13), ces deux chemins s'étendant sur toute la largeur de l'armoire.

Le chemin de câbles situé en partie basse (12) est plus particulièrement destiné aux câbles conduisant les courants faibles, alors que le chemin de câbles situé en partie haute (13) est plus particulièrement destiné aux câbles conduisant les courants forts d'alimentation.

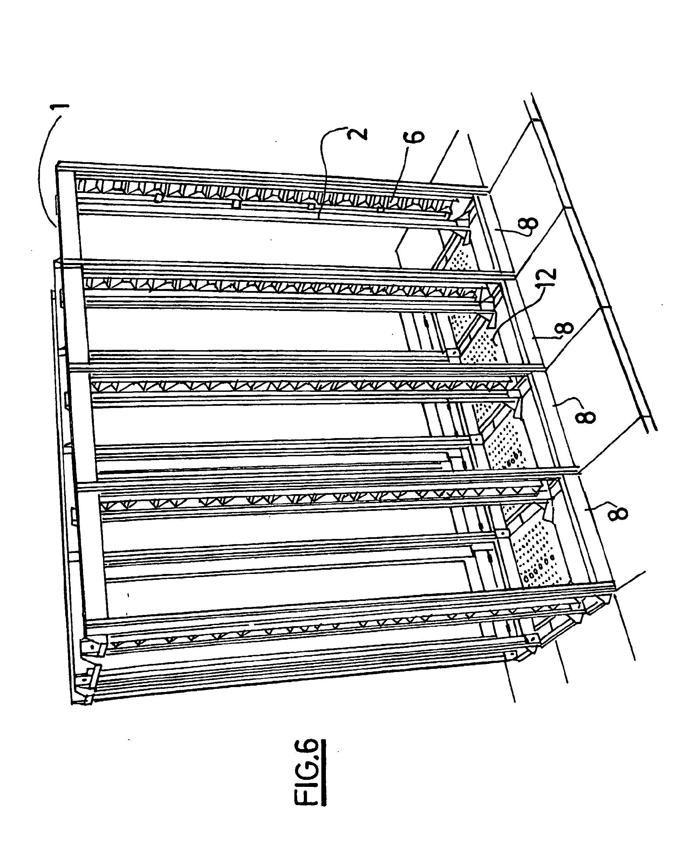

La figure 6 montre quant à elle un exemple de réalisation de l'armoire (1) dans lequel seul le chemin de câbles en partie basse (12) est présent.

Au niveau de chaque montant (2) de l'armoire (1), les goulottes verticales (6) permettent de guider les câbles de façon à les connecter aux appareils électriques (3), lesdites goulottes (6) étant agencées pour recevoir des boîtiers de connexion (10) situés au niveau de chaque rangée d'appareils (3).

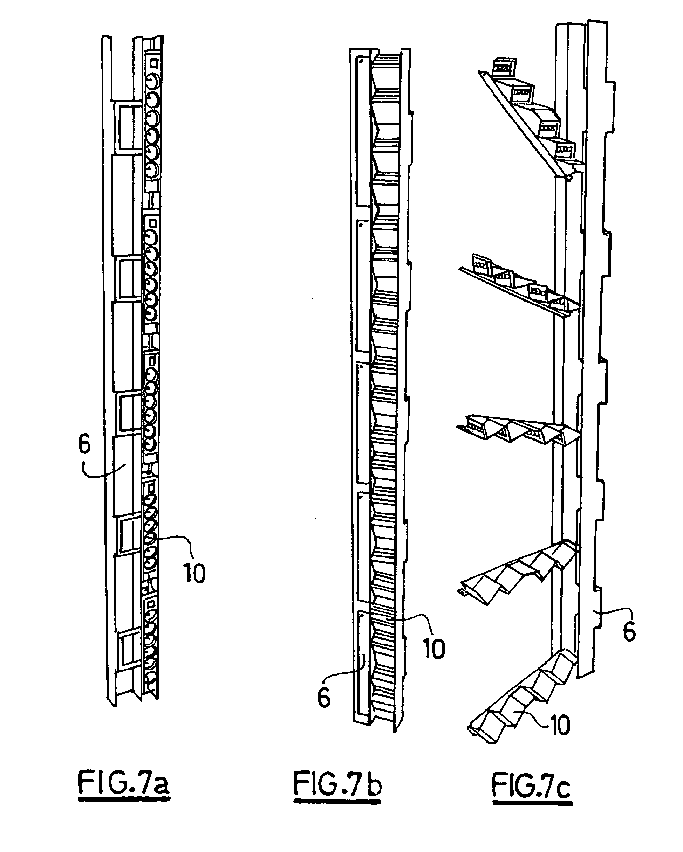

Les figures 7 montrent de façon plus précise ces goulottes verticales (6) équipées de boîtiers de connexion (10) : la figure 7a représente une goulotte verticale (6) équipée de boîtes de prises d'alimentation, et les figures 7b et 7c représentent une goulotte verticale (6) équipée de connecteurs de type informatique (dans la figure 7c, les supports de connecteurs sont en position ouverte).

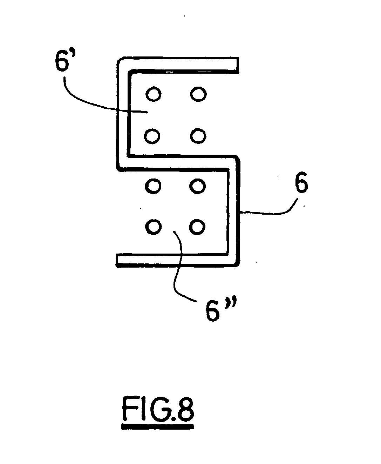

La figure 8 représente quant à elle une goulotte verticale (6) présentant une section transversale en forme de S formant deux demi-goulottes, l'une des demi-goulottes (6') étant agencée pour recevoir les câbles provenant du chemin de câbles situé en partie basse (12), et l'autre demi-goulotte (6 ") étant agencée pour recevoir les câbles provenant du chemin de câbles situé en partie haute (13).

## Revendications

1. Armoire technique (1) destinée à recevoir des appareils électriques (3) et à connecter lesdits appareils (3) au moyen de câbles électriques comprenant au moins un chemin de câbles en partie basse (12), **caractérisée en ce que** les appareils electriques sont disposés sur une pluralité d'étagères ou superposés les uns aux autres par fixation entre les montants (2) de l'armoire (1) **en ce que** ledit chemin de câbles (12) s'étendant sur toute la largeur de l'armoire (1), et **en ce que** l'armoire comprend des goulottes verticales (6) destinées à guider les câbles de façon à les connecter audits appareils (3), situées au niveau d'au moins un des montants (2) de l'armoire (1), lesdites goulottes (6) étant agencées pour recevoir des boîtiers de connexion (10) au niveau de chaque étagère ou de chaque rangée d'appareils (3).

2. Armoire technique (1) selon la revendication 1 **caractérisée en ce qu'**elle comprend un chemin de câbles situé en partie basse (12) pour les câbles conduisant le courant faible.

3. Armoire technique (1) selon la revendication 1 ou 2 **caractérisée en ce qu'**elle comprend un chemin de câbles situé en partie haute (13).

4. Armoire technique (1) selon la revendication 3 **caractérisée en ce qu'**elle comprend un chemin de câbles situé en partie haute (13) pour les câbles conduisant le courant fort.

5. Armoire technique (1) selon l'ensemble des revendications 1 et 3 **caractérisée par le fait que** lesdites goulottes (6) ont une section transversale généralement en S formant deux demi-goulottes, l'une desdites demi-goulotte (6') étant agencée pour recevoir les câbles provenant du chemin de câbles situé en partie basse (12), et l'autre demi-goulotte (6") étant agencée pour recevoir les câbles provenant du chemin de câbles situé en partie haute (13).

6. Armoire technique (1) selon l'une quelconque des revendications précédentes **caractérisée en ce qu'**elle est composée d'une pluralité de modules (8).

7. Armoire technique (1) selon l'une quelconque des revendications précédentes **caractérisée en ce que** sa structure est en aluminium.

8. Armoire technique (1) selon l'une quelconque des revendications précédentes **caractérisée en ce qu'**elle est destinée à recevoir des serveurs informatiques disposés sur une pluralité d'étagères ou superposés les uns aux autres par fixation entre les montants (2) de l'armoire (1).

9. Armoire technique (1) selon l'une quelconque des revendications précédentes destinée à recevoir des appareils électriques (3) nécessitant une ventilation, chacun desdits appareils disposant de moyens de ventilation individuels (9) agencés pour faire circuler l'air d'une face avant vers une face arrière et évacuer ledit air derrière lesdites faces arrière, **caractérisée en ce qu'**elle comporte un système de ventilation comprenant des moyens de distribution d'air au niveau de chaque étagère ou de chaque rangée d'appareils (3), lesdits moyens étant agencés pour approvisionner indépendamment chaque niveau avec un flux d'air primaire circulant sensiblement horizontalement en vis-à-vis desdites faces avant.

10. Armoire technique (1) selon la revendication 9 **caractérisée en ce que** lesdits moyens de distribution d'air comprennent un boîtier (4) situé sur l'avant de l'armoire (1) et comprenant des ventilateurs-extracteurs (5), ainsi qu'au moins une goulotte (6) reliée audit boîtier (4) s'étendant verticalement le long d'au moins un des côtés de l'armoire (1) et comportant au moins une ouverture de sortie d'air (7) au niveau de chaque rangée d'appareils (3).

11. Armoire technique (1) selon la revendication 10, **caractérisée en ce que** ledit boîtier (4) est situé en partie basse de l'armoire (1).

12. Armoire technique (1) selon l'une quelconque des revendications 9 à 11 **caractérisée en ce que** les moyens de ventilation individuels (9) comprennent au moins un extracteur monté dans la face arrière.

## Claims

1. Electrical cabinet (1) designed to house electrical apparatus (3) and to connect the said apparatus (3) using electric cables comprising at least one cable track in the lower part (12), **characterized in that** the electric apparatus is arranged over a plurality of shelves or superimposed one on top of each other by means of fixings between the uprights (2) of the cabinet (1), the said cable track (12) extending over the entire width of the cabinet (1), and **characterised in that** the cabinet comprises vertical channels (6) designed to guide the cables in order to connect them to the said apparatus (3), located on least one of the uprights (2) of the cabinet (1), the said channels (6) being arranged to house connection boxes (10) on each shelf or each row of apparatus (3).

2. Electrical cabinet (1) according to claim 1 **characterised in that** it comprises a cable track located in the lower part (12) for cables conducting low currents.

3. Electrical cabinet (1) according to claim 1 or 2 **characterised in that** it comprises a cable track located in the upper part (13).

4. Electrical cabinet (1) according to claim 3 **characterised in that** it comprises a cable track located in the upper part (13) for cables conducting heavy currents.

5. Electrical cabinet (1) according to claim 1 to 3 **characterised by** the fact that the said channels (6) have a generally and S-shaped cross section forming two semi-channels, one of the said semi-channels (6') being arranged to house cables from the cable track located in the lower part (12), and the other semi-channel (6") being arranged to house cables from the cable track located in the upper part (13).

6. Electrical cabinet (1) according to any of the preceding claims **characterised in that** it comprises a plurality of modules (8).

7. Electrical cabinet (1) according to any of the preceding claims **characterised in that** its structure is in aluminium.

8. Electrical cabinet (1) according to any of the preceding claims **characterised in that** it is designed to house computer servers arranged over a plurality of shelves or superimposed one on top of each other by means of fixings between the uprights (2) of the cabinet (1).

9. Electrical cabinet (1) according to any of the preceding claims designed to house electric apparatus (3) requiring ventilation, each of the said apparatus having individual means of ventilation (9) arranged to make the air circulate from a front face to a rear face and to remove the said air to behind the said rear faces, **characterised in that** they comprise a ventilation system including means to distribute the air along each shelf or each row of apparatus (3), the said means being arranged to supply each level independently with a primary air flow circulating virtually horizontally with regard to the said front faces.

10. Electrical cabinet (1) according to claim 9 **characterised in that** the said means to distribute the air comprise a box (4) located on the front of the cabinet (1) and comprising extractor-fans (5), as well as at least one channel (6) connected to the said box (4) extending vertically along at least one of the sides of the cabinet (1) and comprising at least one air outlet opening (7) for each row of apparatus (3).

11. Electrical cabinet (1) according to claim 10 **characterised in that** the said box (4) is located in the lower part of the cabinet (1).

12. Electrical cabinet (1) according to any of claims 9 to 11 **characterised in that** the individual ventilation means (9) comprise at least one extractor mounted in the rear face.

## Patentansprüche

1. Technikschrank (1), der zur Aufnahme elektrischer Geräte (3) bestimmt ist, und zur Verbindung der genannten Geräte (2) mittels elektrischer Kabel, umfassend zumindest einen Kabelweg im unteren Bereich (12), **dadurch gekennzeichnet, dass** die elektrischen Geräte auf einer Anzahl von Regalböden angeordnet sind oder aufeinander oder übereinander angeordnet sind, durch Fixierung zwischen den Stützen (2) des Schranks (1), und dass sich der genannte Kabelweg (12) über die gesamte Breite des Schranks erstreckt, und dass der Schrank vertikale Kanäle (6) aufweist, die dazu bestimmt sind, die Kabel so zu führen, um sie mit den genannten Geräten (3) zu verbinden, angeordnet in Höhe von zumindest einer Stütze (2) des Schranks (1), wobei die genannten Kanäle (6) eingerichtet sind, um Verbindungsgehäuse (10) in Höhe eines jeden Regalbodens oder einer jeden Reihe von Geräten (3) aufzunehmen.

2. Technikschrank (1) nach Anspruch 1, **dadurch gekennzeichnet, dass** er einen Kabelweg aufweist, der im unteren Bereich (12) angeordnet ist, für Kabel, die Schwachstrom führen.

3. Technikschrank (1) nach einem der Ansprüche 1 oder 2, **dadurch gekennzeichnet, dass** er einen Kabelweg aufweist, der im oberen Bereich (13) angeordnet ist.

4. Technikschrank (1) nach Anspruch 3, **dadurch gekennzeichnet, dass** er einen Kabelweg aufweist, der im oberen Bereich (13) angeordnet ist, für Kabel, die Starkstrom führen.

5. Technikschrank (1) nach den Ansprüchen 1 und 3, **dadurch gekennzeichnet, dass** die genannten Kanäle (6) einen Querschnitt aufweisen, der im Ganzen S-förmig ist und zwei Halbkanäle bildet, wobei der eine (6') der genannten Halbkanäle eingerichtet ist, um die Kabel aufzunehmen, die von dem Kabelweg kommen, der sich im unteren Bereich (12) befindet, und der andere (6") der genannten Halbkanäle eingerichtet ist, um die Kabel aufzunehmen, die von dem Kabelweg kommen, der sich im oberen Bereich (13) befindet.

6. Technikschrank (1) nach einem der vorangehenden Ansprüche, **dadurch gekennzeichnet, dass** er aus einer Anzahl von Modulen (8) zusammengesetzt ist.

7. Technikschrank nach einem der vorangehenden Ansprüche, **dadurch gekennzeichnet, dass** seine Struktur aus Aluminium besteht.

8. Technikschrank (1) nach einem der vorangehenden Ansprüche, **dadurch gekennzeichnet, dass** er dazu bestimmt ist, Informatikserver aufzunehmen, die auf einer Anzahl von Regalböden angeordnet sind oder auf- oder übereinander angeordnet sind, durch Fixierung zwischen den Stützen (2) des Schranks (1).

9. Technikschrank (1) nach einem der vorangehenden Ansprüche, **dadurch gekennzeichnet, dass** er zur Aufnahme von elektrischen Geräten (3) bestimmt ist, die eine Belüftung benötigen, wobei jedes der genannten Geräte über ein individuelles Belüftungsmittel (9) verfügt, das dazu eingerichtet ist, um Luft von einer Vorderseite zu einer Rückseite zirkulieren zu lassen und die genannte Luft hinter den genannten Rückseiten abzuleiten, **dadurch gekennzeichnet, dass** er ein Belüftungssystem umfasst, das mit Mitteln zur Luftverteilung in Höhe eines jeden Regalbodens oder einer jeden Reihe von Geräten (3) versehen ist, wobei die genannten Mittel eingerichtet sind, um jede Höhe unabhängig mit einem primären Luftstrom zu versorgen, der im Wesentlichen horizontal gegenüber den genannten Vorderseiten zirkuliert.

10. Technikschrank (1) nach Anspruch 9, **dadurch gekennzeichnet, dass** die genannten Mittel zur Luftverteilung ein Gehäuse (4) umfassen, das auf der Vorderseite des Schranks (1) angeordnet ist und Abzugsventilatoren (5) aufweist, sowie zumindest einen Kanal (6), der mit dem genannten Gehäuse (4) verbunden ist und sich in vertikaler Richtung entlang zumindest einer Seite des Schranks (1) erstreckt und zumindest eine Luftaustrittsöffnung (7) in Höhe einer jeden Reihe von Geräten (3) aufweist.

11. Technikschrank (1) nach Anspruch 10, **dadurch gekennzeichnet, dass** das genannte Gehäuse (4) im unteren Bereich des Schranks (1) angeordnet ist.

12. Technikschrank (1) nach einem der Ansprüche 9 bis 11, **dadurch gekennzeichnet, dass** die Mittel zur individuellen Belüftung (9) zumindest einen Abzug aufweisen, der in der Rückseite angebracht ist.
